# EUROPEAN PATENT APPLICATION

(11) **EP 0 965 539 A1**
(43) Date of publication of application: **22.12.1999**
(21) Application number: 99500093.2
(22) Date of filing: 04.06.1999
(51) Int. Cl.: B65D 81/32

(54) **A reusable device for the separate carrying and combined consumption of foodstuffs**

(30) Priority: 16.06.1998 ES 9801582
(71) Applicant: Plasticos Espelt, S.L., 43400 Montblanc, Tarragona (ES)
(72) Inventor: Ventura, Jose Espelt, 43411 Blancafort, Tarragona (ES)
(74) Representative: Cobas Horcajo, Susana

(57) **Abstract**

The device is designed to keep different products separate until they are consumed, specifically a solid or dry product (3) and a liquid product (5) which, when consumed, must be suitably mixed. Said device thus has a main compartment (1) for the dry food, ciosed by a top (12) using a thread (13) and with the feature that said top (13) which is fairly tall, contains an auxiliary compartment (2) which, in turn, has a hermetie seal top (22) so that the liquid foodstuff (5) contained in said auxiliary compartment (2) can he poured into the main compartment (1) after removing its top (12), with said main compartment (1) acting as the container for the mixing and consumption of both products. The main compartment (1) is larger than the auxiliary compartment (2) so that a spoon (4) can be placed in it to be used to eat the mixture of both products.

## Description

### OBJECT OF THE INVENTION

As its title indicates, this invention refers to a device comprising two containers designed to contain two foodstuffs, preferably in liquid or paste form, and in solid state, and which can be connected and separated in order to mix said foodstuffs and consume them together.

### PRIOR ART

It is a common practice for children to take some form of food to school so that the problem arises of the difficulty of carrying foods separately which are consumed together and which are mixed before use in order to maintain a particular texture and taste: such foods may be cereals and milk, a standard breakfast for a large number of children.

There are some recipients currently on the market with two separate containers or compartments containing different foodstuffs, generally yoghurt and cereals, which are sealed by a complex strip soldered on to the periphery of each such compartment which, when removed, enables the two foodstuffs to be mixed.

Such recipients break easily when carried by children in their school pack or case along with other items such as books or pencils and so are not a suitable solution to the problem raised.

### DESCRIPTION OF THE INVENTION

The device which is the subject of the invention has a series of constructive features which make it particularly suitable for carrying foodstuffs separately which are intended to be mixed and consumed immediately.

Said device comprises a main recipient to contain a spoon and a dry food product, and provided with devices for the coupling of an auxiliary recipient which can carry a liquid foodstuff, so that both recipients can be separated to enable said liquid foodstuff to be poured on to the dry foodstuff for their joint consumption.

According to the invention, the main recipient comprises a base and a cover with complementary closing elements, which may be pressure-fitted or screw-on.

There is provision for a central opening in the cover of the main recipient to provide the resources for the neat fit of the auxiliary recipient: said cover has a tubular appendage, aligned with the opening, to stabilise the auxiliary recipient in its position.

The auxiliary recipient which is to contain the liquid foodstuff, comprises a base and a cover with closing devices in the form of two complementary threads.

The cover of the auxiliary recipient is slightly larger than the opening in the main recipient's cover so that it connects with it face-on when the auxiliary recipient is fitted to the main recipient, so determining their coupling position.

To ensure that the auxiliary recipient is sealed, it has a stopper on the inside of the cover which fits into the base of said recipient to prevent possible fluid leaks.

### DESCRIPTION OF THE DRAWINGS

To complete this description and to help in a better understanding of the features of the invention, these Specifications are accompanied by a set of drawings, forming an integral part hereof which, by way of illustration and without limitation, show the following:

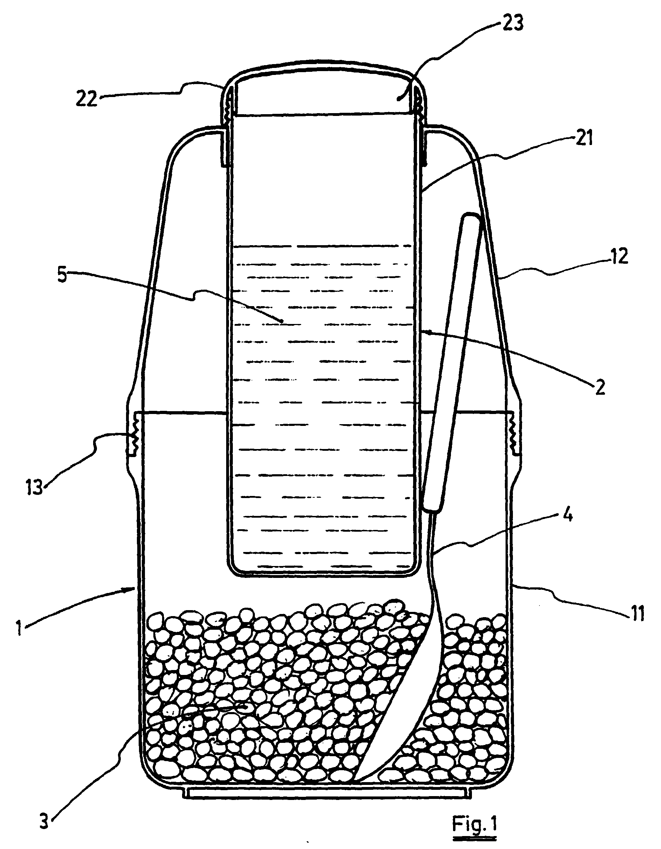

- Figure 1 is an elevation view of the device which is the object of the invention, with the foodstuffs held separately in the auxiliary and main recipients, fitted together and with the two cut through a vertical cross-section.

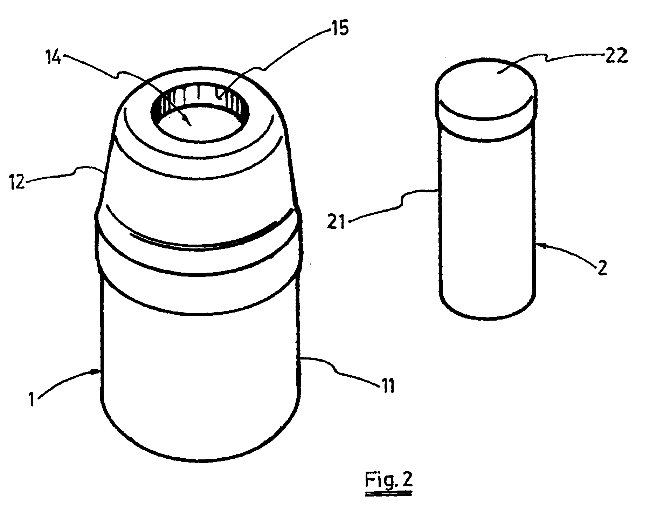

- Figure 2 is a perspective view of the two recipients separated and closed.

### A PREFERRED EMBODIMENT OF THE INVENTION

As shown in the figures referred to, this device comprises a main recipient (1) and an auxiliary recipient (2).

Said main recipient (1) is intended to contain a dry foodstuff (3) and a spoon (4) and is formed by a base (11) and a cover (12), the opposing openings of which have threaded sections for closing (3).

The cover (12) has a central opening (14) with which a tubular portion (15) is aligned which extends into the cover: said opening has devices for coupling the auxiliary recipient (2), and the tubular portion (15) has devices to stabilise it.

The auxiliary recipient (2) intended for a liquid foodstuff (5) comprises a base (21) and a closing cover (22) which screws onto said base (21).

Said cover (22) has a stopper (23) inside to insert into the base (21) to ensure that the seal is hermetic.

The base (21) is of a cross-section similar to that of the opening (14) so that it can fit inside.

With this arrangement of elements, to consume the foodstuffs (3) and (5) together, with the spoon (4), all that is required is to remove the auxiliary recipient (2), open the two recipients, and pour the liquid product over the dry product (3).

It is not considered necessary to further extend this description in order for any expert in the field to grasp the scope of the invention and the benefits arising from it.

The terms in which these Specifications are drafted must always be interpreted broadly and without limitation.

The materials, shape, size and arrangement of the elements may be varied provided that this does not involve a change to the essential features of the invention claimed below.

## Claims

1. A reusable device for the separate carrying and combined consumption of foodstuffs, characterised by comprising a main recipient (1) intended to contain a spoon (4) and a dry foodstuff (3), with devices for the attachment of an auxiliary recipient (2) which can contain a liquid foodstuff (5), and wherein both recipients can be separated to enable the liquid foodstuff (5) to be poured over the dry foodstuff (3) 50 that they can be consumed together.

2. A device as set forth in the previous claim wherein the main recipient (1) comprises a base (11) and a cover (12) with complementary pressure-fit or screw-on devices.

3. A device as set forth in the previous claims wherein the elements for attaching the auxiliary recipient (2) consist of an opening (14) in the centre of the cover (12) of the main recipient (1) of such a size as to allow the auxiliary recipient (2) to fit neatly inside it.

4. A device as set forth in the previous claims wherein the cover (12) of the main recipient has a tubular appendage (15) inside aligned with the opening (14) to stabilise the auxiliary recipient in the attached position.

5. A device as set forth in the previous claims, wherein the auxiliary recipient (2) has a base (21) and a screw-top (22).

6. A device as set forth in the previous claims, wherein the cover (22) of the auxiliary recipient (2) is slightly larger than the opening (14) in the cover (12) of the main recipient (1), providing a stop while they are fitted together.

7. A device as set forth in the previous claims, wherein the cover (22) of the auxiliary recipient has an internal stopper (23) which fits into the base (21) to ensure that the seal is hermetic.
